Europäisches Patentamt

**European Patent Office** (11) Publication number: **0 007 596**

Office européen des brevets **B1**

(19)

(12) **EUROPEAN PATENT SPECIFICATION**

(45) Date of publication of patent specification: **22.02.84** (51) Int. Cl.³: **G 01 L 9/12, G 01 L 7/08**

(21) Application number: **79102576.0**

(22) Date of filing: **20.07.79**

(54) Capacitive pressure sensor.

(30) Priority: **21.07.78 JP 88450/78**

(43) Date of publication of application:
**06.02.80 Bulletin 80/3**

(45) Publication of the grant of the patent:
**22.02.84 Bulletin 84/8**

(84) Designated Contracting States:
**DE FR GB IT**

(56) References cited:
**FR - A - 2 344 006**
**US - A - 3 397 278**
**US - A - 3 505 634**
**US - A - 3 505 875**
**US - A - 3 748 571**

(73) Proprietor: Hitachi, Ltd.
5-1, Marunouchi 1-chome
Chiyoda-ku Tokyo 100 (JP)

(72) Inventor: Shimada, Satoshi
2672-107, Kanesawa
Hitachi, Ibaraki (JP)
Inventor: Kawakami, Kanji
18-5, Inada
Katsuta, Ibaraki (JP)
Inventor: Nishihara, Motohisa
1166-122, Inada
Katsuta, Ibaraki (JP)

(74) Representative: Strehl, Peter et al,
Strehl, Schübel-Hopf, Schulz Patentanwälte
Widenmayerstrasse 17 Postfach 22 03 45
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Capacitive pressure sensor

This invention relates to a capacitive pressure sensor according to the preamble of the claim.

As disclosed in, for example, U.S.—A—3,232,114, a capacitive pressure sensor has heretofore been such that a resilient diaphragm is formed of metal and is under uniform tension. It is necessary that the proportionality (linearity) between the input pressure and the output voltage is high. For meeting this requirement, it is a very important factor that the diaphragm is formed under uniform tension. In the disclosure of the above patent, the diaphragm is maintained under a stress of approximately 270 kN, and its marginal portion is disposed between and is welded to two metal housing sections. The diaphragm, for the above reasons, must be carefully welded to the two housing sections while in stressed condition. Such process has been carried out with, for example, arc welding or electron-beam welding. However, it has been very difficult to fix the diaphragm under the high tension and uniform state, resulting in the disadvantage of low productivity.

In U.S.—A—3,405,559, there is disclosed a diaphragm construction for a capacitive pressure transducer in which the measuring components, particularly a pressure-deformable diaphragm, are constructed from a brittle material, such as fused quartz, to take advantage of low hysteresis and creep factors and a low thermal coefficient of expansion. However, the brittle materials disclosed in this patent are insulators, and a conductor must be evaporated onto the surface of the pressure-deformable diaphragm formed of the insulator. Besides, the shape of the diaphragm is cylindrical.

From US—A—3,748,571, a capacitive pressure sensor is known having a substrate on which a conduit is formed, a diaphragm of conductive material which is mounted on said substrate and deflected depending on pressure, and an electrode which is constructed of conductive material and positioned opposite to said diaphragm, whereby said electrode and said diaphragm form an electrostatic capacity therebetween. Said diaphragm is made of silicon and said substrate is made of insulator material. Said silicon diaphragm is rigidly secured onto said substrate of insulator material by an electrostatic technique. The substrate has the shape of a cup in order to provide a clearance between the substrate and the deflectable diaphragm.

In US—A—3,505,634 and in US—A—3,505,875, a differential pressure transducer is disclosed which uses strain gauge elements to indicate the pressure acting on a deflectable diaphragm, which is made of a metal sheet. The strain gauge elements are fixed on both sides of the diaphragm.

Further, US—A—3,793,885 discloses a prior art having a diaphragm construction for a differential pressure transducer having means around the periphery thereof in order to isolate the diaphragm stress from the mounting portion of the diaphragm.

In US—A—3,397,278, a bonding method that is called "anodic bonding", is described. Especially, bonding silicon to insulator materials as borosilicate glass is emphasized.

It is an object of this invention to provide a capacitive pressure sensor which is excellent in various characteristics and small in size.

This object is accomplished by the features mentioned in the characterizing portion of the claim. The diaphragm is formed of silicon which is excellent in workability, while the substrate is formed of borosilicate glass which is substantially equal to silicon in the coefficient of thermal expansion, and the silicon diaphragm and the substrate made of borosilicate glass are joined by the anodic bonding technique.

The symmetrical construction of the diaphragm minimizes the influence of temperature. As the gap portion of the diaphragm can be precisely formed by etching and thus can be made small, the sensibility of the sensor is high.

The above and other objects and advantages of the present invention will become apparent from the following detailed description of the preferred embodiments given with reference to the accompanying drawings.

In the drawings,

Figure 1 is a perspective view, partially in section, of a differential pressure transmitter for industrial use which employs and embodiment of the capacitive pressure sensor according to this invention;

Figure 2 is an enlarged sectional view of the capacitive pressure sensor shown in Figure 1;

Figures 3(a) to 3(d) are views for explaining a manufacturing process for a silicon diaphragm as shown in Figure 1 or Figure 2;

Figures 4(a) to 4(e) are views for explaining a manufacturing process for still another diaphragm.

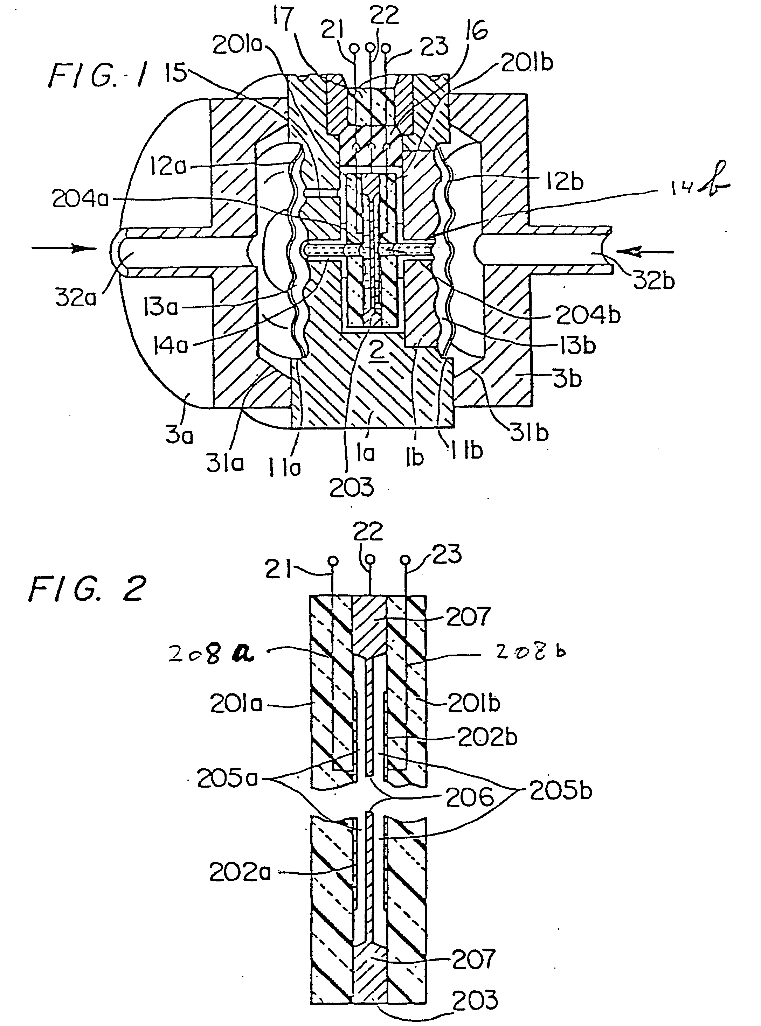

Referring to Figure 1, a differential pressure transmitter for industrial use has housing portions 1a and 1b in which a capacitive pressure sensor, more exactly, differential pressure sensor 2 according to this invention is assembled, and two end caps 3a and 3b which are placed on sides of the housing. Both the housing portions 1a and 1b and the two end caps 3a and 3b are formed by, for example, the die casting of a metal such as aluminum, and they are rigidly secured to each other by, for example, welding or screws.

The respective sides of the housing portions

1a and 1b are formed with circular recesses 11a and 11b, which define spaces along with recesses 31a and 31b of the end caps 3a and 3b respectively. The respective end caps 3a and 3b have pressure inlets 32a and 32b, through which external fluids under two pressures to be measured are led into the spaces inside the pressure transmitter.

Seal diaphragms 12a and 12b which are made of a rigid and corrosion-proof material such as stainless steel are firmly secured by welding or the like on the bottom surfaces of the two recesses 11a and 11b. In interspaces which are respectively formed between the seal diaphragms 12a and 12b and the bottom surfaces of the recesses 11a and 11b of the housing 1a and 1b, sealing liquids 13a and 13b such as silicone oil are enclosed in a manner to fill up the interspaces. Pressure conduits 14a and 14b are provided in the bottoms of the recesses 11a and 11b of both housing portions 1a and 1b, and the silicone oils 13a and 13b in the interspaces are introduced into the capacitive differential pressure sensor 2 through the pressure conduits. The bottom of the recess 11a formed with a penetrating hole 15, through which the silicon oil 13a in the interspace is led around the capacitive differential pressure sensor 2. Three lead wires 21, 22 and 23 from the capacitive differential pressure sensor 2 are led out of the differential pressure transmitter through a layer 16 of an insulator disposed between the housing portions 1a and 1b and a layer 17 of a glass molded on the insulator layer.

Referring also to Figure 2, the capacitive differential pressure sensor 2 has substrates 201a and 201b which are formed of an insulating material and which have metallic thin film electrodes 202a and 202b attached to their inner surfaces respectively, and a diaphragm 203 which is sandwiched between the two substrates 201a and 201b. The substrates 201a and 201b are respectively formed with pressure introducing apertures 204a and 204b at positions corresponding to the pressure conduits 14a and 14b, and through the pressure conduits 14a and 14b as well as the pressure introducing apertures 204a and 204b, the silicone oils 13a and 13b enclosed in the interspaces are led into pressure chambers 205a and 205b defined between the substrates 201a and 201b and the diaphragm 203, respectively thereby forming a pair of symmetrical capacities. The diaphragm 203 is made up of a thin-walled movable portion 206 and a thick-walled fixed portion 207. The electrodes 202a and 202b are respectively connected to the lead wires 21 and 23 through lead wires 208a and 208b which are buried in the substrates 201a and 201b. A three-layered electrode or an aluminum electrode, for example, is formed on the diaphragm 203, and the lead wire 22 is connected therewith.

The substrates 201a and 201b are formed of borosilicate glass, while the diaphragm 203 is formed of silicon. Such silicon diaphragm 203 has the advantage that various characteristics are excellent for a diaphragm owing to low hysteresis and creep factors. Besides, it has the advantage that a precise and distortionless working can be made by, for example, etching, especially a superprecision working in the order of microns being possible with the alkali etching technique. Since the silicon can also be used as a conductor by adjusting the impurity density thereof, it becomes unnecessary to form a thin film electrode of metal or the like on the surface of the silicon. The borosilicate glass forming the substrate has a coefficient of thermal expansion of $3.25 \times 10^{-6}/°C$, which is approximately equal to the coefficient of thermal expansion of the silicon, so that no distortion is caused by a change in the ambient temperature.

An example of a method of fabricating the capacitive differential pressure sensor will now be described. A metal of high conductivity such as gold (Au) and platinum (Pt) is evaporated or plated onto the inner surfaces of the substrates 201a and 201b, to form the thin film electrodes 202a and 202b. Thereafter, the silicon diaphragm 203 is sandwiched in between these substrates 201a and 201b. A positive electrode is attached to the conductor, i.e., silicon diaphragm 203, while a negative electrode is attached to the insulator, i.e., glass substrates 201a and 201b.

Subsequently, the whole structure is heated to a temperature of about 450°C, and a high voltage of about 1,000 volts (V) is applied across the electrodes for several minutes. In consequence, the bonded surfaces between the silicon diaphragm 203 and the glass substrates 201a and 201b are electrostatically joined, and they do not separate even when the voltage is removed. Owing to such anodic bonding technique, the diaphragm and the substrates can be joined under the ideal state of high strength and no distortion without employing any binder. For this reason, the linearity in the pressure transduction characteristic of the capacitive pressure sensor having the above construction is enhanced. According to such process, a plurality of capacitive pressure sensors can be assembled at a time by placing the glass substrates on a silicon wafer in which a plurality of diaphragms are formed. Therefore, the productivity is also enhanced.

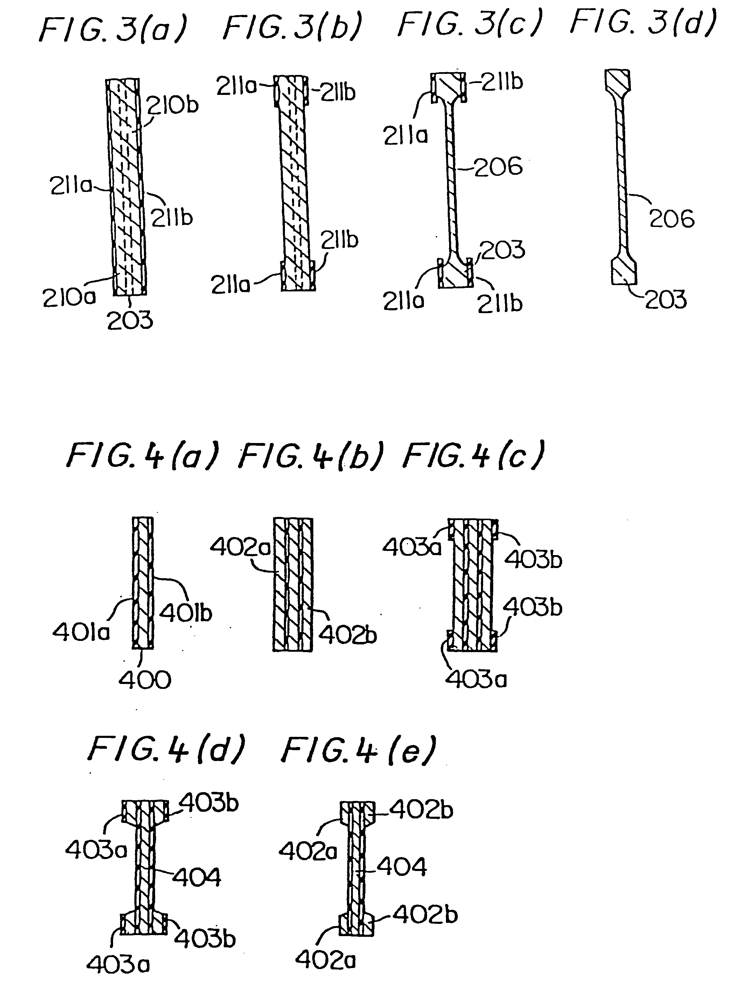

Figures 3(a) to 3(d) illustrate a method of fabricating the silicon diaphragm 203 shown in Figure 1 or Figure 2. First of all, as shown in Figure 3(a), layers 210a and 210b in which, for example, boron is diffused at a high density (of $10^{20}$ atoms/cm$^3$) are formed in both the surfaces of the silicon substrate 203. As shown in Figure 3(b), oxide films 211a and 211b formed at this time are partly removed by photoetching. Subsequently, as shown in Figure 3(c), the heavily doped layers are removed symmetrically by the acid etching, the alkali etching or the like by employing the remaining oxide films 211a and 211b as a mask. Thus, the thin portion 206 of the diaphragm is formed. The symmetrically heavily doped layers 210a and 210b are approximately ten times higher in the etching rate than the silicon substrate 203 of low impurity density, so that the silicon substrate 203 can be left as the thin movable portion 206 of the diaphragm at a uniform thickness. Thereafter, as shown in Figure 3(d), the oxide films 211a and 211b are removed to obtain the silicon diaphragm 203.

With the capacitive differential pressure sensor 2 as stated above, the movable portion 206 of the diaphragm 203 is deflected depending upon the difference of the pressures of the fluids or silicon oils 13a and 13b respectively introduced into the pressure chambers 205a and 205b through the pressure introducing apertures 204a and 204b in both the side surfaces of the pressure sensor, the distances between the diaphragm 203 and the respective electrodes 202a and 202b are accordingly varied, and an output voltage $E_o$ expressed by the following equations is provided by an electric circuit not shown:

$$E_o = \frac{C_x}{C_s} \cdot E_s \qquad (1)$$

$$C_x = \frac{\varepsilon A}{X_o + X} \qquad (2)$$

In the above equations, $C_s$ denotes a reference capacitance, $E_s$ the output A.C. voltage of an oscillator in the electric circuit, $\varepsilon$ a dielectric constant, A the area of the electrodes, $X_o$ an initial clearance, and X the deflection of the diaphragm.

Figures 4(a) to 4(e) illustrate a process for manufacturing a silicon diaphragm by utilizing an oxide film as a stopper. First, oxide films 401a and 401b are formed on both surfaces of a silicon substrate 400 by the C.V.D. process. Polycrystalline silicon layers 402a and 402b are stacked on the respective oxide films 401a and 401b by the epitaxial growth, and are baked up at a high temperature of about 1,000°C. Oxide films formed at this time are partly removed, whereupon using the remaining oxide films 403a and 403b as a mask, the stacked polycrystalline silicon layers 402a and 402b are removed by the acid etching or the like so as to form a thin movable portion 404. The oxide films left behind are removed. The thickness of the thin movable portion 404 of the diaphragm fabricated by such process is very uniform and has a good reproducibility.

Regarding the silicon to form the diaphragm, either polycrystalline silicon or single-crystal silicon can be employed. In view of experiments, however, the single-crystal silicon is more desirable.

## Claim

A capacitive pressure sensor including a substrate (201A) of insulator material in which a conduit (204A) is formed, a diaphragm (203) of conductive silicon having a thick supporting portion (207) rigidly and sealingly bonded to the substrate by an anodic bonding process and a thin deflecting portion (206) surrounded by the thick supporting portion and adapted to be deflected by pressure, a pressure chamber (205A) formed between the substrate and the diaphragm, into which chamber a fluid under the pressure to be sensed is admitted through the conduit, and a thin film electrode (202A), constructed of conductive material disposed on the substrate surface facing the diaphragm, forming an electrostatic capacity therewith, characterised in that the thin deflecting portion (206) of the diaphragm (203) is reduced symmetrically from both sides thereof to form recesses at both sides of the diaphragm (203), that both sides of the thick supporting portion of the diaphragm are rigidly and sealingly bonded by the anodic bonding process to substrates (201A, 201B) each provided with a thin film electrode (202A, 202B) and a conduit (204A, 204B), two pressure chambers (205A, 205B) being formed between the substrates and the diaphragm, that the substrate (201A, 201B) are made of borosilicate glass, and that the substrate surfaces are flat, so that the spacings between the diaphragm and the electrodes (202A, 202B) are substantially determined by the recesses of the diaphragm.

## Patentanspruch

Kapazitiver Drucksensor mit einem Substrat (201A) aus einem Isolatormaterial, in dem ein Kanal (204A) gebildet ist, mit einem Diaphragma (203) aus leitendem Silizium, das einen dicken Stützteil (207), der fest und dichtend an dem Substrat mit dem Verfahren des anodischen Verbindens befestigt ist und einen dünnen Biegeteil (206) aufweist, der von dem dicken Stützteil umgeben ist und der geeignet ist, aufgrund von Druck gebogen zu werden, mit einer Druckkammer (205A), die zwischen dem Substrat und dem Diaphragma gebildet ist, wobei durch den Kanal eine unter dem abzutastenden Druck stehende Flüssigkeit in die Kammer hereingelassen wird, und mit einer dünnen Filmelektrode (202A), die aus leitendem Material aufgebaut ist und auf der dem Diaphragma gegenüberliegenden Substratoberfläche angeordnet ist und mit dieser eine elektrostatische Kapazität bildet, dadurch gekennzeichnet, daß der dünne Biegeteil (206) des Diaphragmas (203) symmetrisch von seinen beiden Seiten her verjüngt ist, so daß an beiden Seiten des Diaphragmas (203) Rücksprünge gebildet sind, daß beide Seiten des dicken Stützteils des Diaphragmas fest und dichtend mittels des Verfahrens des anodischen Verbindens mit den Substraten (201A, 201B) verbunden sind, welche mit einer dünnen Filmelektrode (202A, 202B) und einem Kanal (204A, 204B) versehen sind, wobei zwei Druckkammern (205A, 205B) zwischen den Substraten und dem Diaphragma gebildet werden, daß die Substrate (201A, 201B) aus Borosilikatglas gemacht sind, und daß die Substratoberflächen eben sind, so daß die Abstände zwischen dem Diaphragma und den Elektroden (202A, 202B) im wesentlichen durch die Rücksprünge des Diaphragmas bestimmt werden.

## Revendication

Capteur de pression capacitif comportant un substrat (201A) en matériau isolant, dans lequel un conduit (214) est formé, un diaphragme (203) en silicium conducteur possédant une partie de support épaisse (207) fixée de façon rigide et étanche au substrat au moyen d'un procédé de liaison anodique, et une partie mince apte à fléchir (206) entourée par la partie de support épaisse et apte à être fléchie par la pression, une chambre de pression (205A) formée entre le substrat et le diaphragme et dans laquelle un fluide soumis à la pression devant être détectée est admis par l'intermédiaire du conduit, et une électrode en forme de pellicule mince (202A) constituée en un matériau conducteur disposé sur la surface du substrat tournée vers le diaphragme et constituant une capacité électrostatique avec ce dernier, caractérisé en ce que la paroi mince apte à fléchir (206) du diaphragme (203) est amincie de façon symétrique à partir des deux faces du diaphragme (203) de manière à former des renfoncements dans ces faces, que les deux faces de la partie de support épaisse du diaphragme sont fixées de façon rigide et étanche par le procédé de liaison anodique à des substrats (201A, 201B) comportant chacun une électrode en forme de pellicule mince (202A, 202B) et un conduit (204A, 204B), deux chambres de pression (205A, 205B) étant formées entre les substrats et le diaphragme, que les substrats (201A, 201B) sont constitués par du verre au borosilicate, et que les surfaces des substrats sont plates, de sorte que les espacements entre le diaphragme et les électrodes (202A, 202B) sont déterminés essentiellement par les renfoncements du diaphragme.

FIG. 1

FIG. 2

0 007 596

FIG. 3(a)  FIG. 3(b)  FIG. 3(c)  FIG. 3(d)

FIG. 4(a)  FIG. 4(b)  FIG. 4(c)

FIG. 4(d)  FIG. 4(e)